(19) Europäisches Patentamt
European Patent Office
Office européen des brevets

(11) EP 1 151 031 B1

(12) EUROPÄISCHE PATENTSCHRIFT

(45) Veröffentlichungstag und Bekanntmachung des Hinweises auf die Patenterteilung:
**15.03.2006 Patentblatt 2006/11**

(21) Anmeldenummer: **00903621.1**

(22) Anmeldetag: **24.01.2000**

(51) Int Cl.:
*C08K 3/00* (2006.01) *C08K 3/22* (2006.01)
*C08L 69/00* (2006.01)

(86) Internationale Anmeldenummer:
**PCT/EP2000/000515**

(87) Internationale Veröffentlichungsnummer:
**WO 2000/046285 (10.08.2000 Gazette 2000/32)**

# (54) POLYCARBONAT FORMMASSEN MIT ANTISTATISCHEN EINGENSCHAFTEN

POLYCARBONATE MOULDING MATERIALS WITH ANTI-STATIC PROPERTIES

MATIERES MOULABLES DE POLYCARBONATE PRESENTANT DES PROPRIETES ANTISTATIQUES

(84) Benannte Vertragsstaaten:
**AT BE CH CY DE DK ES FI FR GB GR IE IT LI LU MC NL PT SE**

(30) Priorität: **04.02.1999 DE 19904392**

(43) Veröffentlichungstag der Anmeldung:
**07.11.2001 Patentblatt 2001/45**

(73) Patentinhaber: **Bayer MaterialScience AG**
**51368 Leverkusen (DE)**

(72) Erfinder:
- **ZOBEL, Michael**
  **D-40547 Düsseldorf (DE)**
- **ECKEL, Thomas**
  **D-41540 Dormagen (DE)**
- **WITTMANN, Dieter**
  **D-51375 Leverkusen (DE)**
- **KELLER, Bernd**
  **D-47608 Geldern (DE)**

(56) Entgegenhaltungen:
**EP-A- 0 107 015** **US-A- 5 274 017**

- **PATENT ABSTRACTS OF JAPAN vol. 013, no. 273 (C-609), 22. Juni 1989 (1989-06-22) & JP 01 066271 A (KANEBO LTD), 13. März 1989 (1989-03-13)**
- **PATENT ABSTRACTS OF JAPAN vol. 017, no. 457 (P-1597), 20. August 1993 (1993-08-20) & JP 05 101446 A (RICOH CO LTD), 23. April 1993 (1993-04-23)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Polycarbonat-Formmassen, enthaltend Aluminium Verbindungen, die verbesserte mechanische Eigenschaften und verbesserte antistatische Wirkung bewirken.

Thermoplastische Formmassen insbesondere solche, die Homo-und/oder Copolymerisate von einem oder mehreren ethylenisch ungesättigten Monomeren, Polycarbonate sowie Polyester enthalten, sind aus einer Vielzahl Veröffentlichungen bekannt. Dies gilt insbesondere für den Einsatz von ABS-Polymerisaten. Nur beispielhaft sei auf folgende Dokumente hingewiesen: DE-A-19616, WO 97/40092, EP-A-728811, EP-A-315868 (= US-A-4937285), EP-A 0174493 (US-P 4983658), US-P 5030675, JA 59202240, EP-A 0363608 (= US-P 5204394), EP-A 0767204, EP-A 0611798, WO 96/27600, EP-A 0754.

US-A-5274017 beschreibt Zusammensetzungen, die Polycarbonat und Aluminiumoxid als Flammschutzmittel enthalten, wobei der Teilchendurchmesser des Aluminiumoxids kleiner al 1 $\mu$m ist.

EP-A-0107015 beschreibt Zusammensetzungen, die Polycarbonat, ABS, SAN und Aluminiumpartikel enthalten. Die Aluminiumpartikel haben eine Länge von 0,0008 inches, was 20 $\mu$m entspricht.

Die in diesem Stand der Technik beschriebenen thermoplastischen Formmassen sind in ihren mechanischen Eigenschaften noch verbesserungsbedürftig. Dies gilt insbesondere für die Anwendung dieser Formmassen in sicherheitsrelevanten Teilen zB. in der Kfz-Industrie, wo hohe Anforderungen an die Reißdehnung, das ESC-Verhalten, die Kerbschlagzähigkeit, die Wärmeformbeständigkeit und die Verarbeitbarkeit gestellt werden.

Außerdem bedarf die antistatische Wirkung der bekannten Formmassen noch der Verbesserung.

Überraschenderweise wurde nun gefunden, daß Polycarbonat-Formmassen eine antistatische Wirkung und verbesserte mechanische Eigenschaften aufweisen, wenn ihnen Aluminiumverbindungen zugesetzt werden.

Gegenstand der vorliegenden Erfindung sind demgemäß thermoplastische Formmassen enthaltend thermoplastisches Polycarbonat und 0,01 bis 30, bevorzugt 0,01-20, besonders bevorzugt 0,01-10 Gew.-Teile pro 100 Gew.-Teile (Polycarbonat) Aluminiumverbindungen mit einem mittleren Teilchendurchmesser von 1nm - 20 $\mu$m, vorzugsweise 1nm - 10 $\mu$m, besonders bevorzugt 5 - 500 nm, höchst bevorzugt 5 - 200 nm.

Gegenstand der Erfindung sind insbesondere thermoplastische Formmassen enthaltend

A. 40 bis 99 Gew.-Teilen, vorzugsweise 50 bis 95 Gew.-Teilen, besonders bevorzugt 60 bis 90 Gew.-Teilen eines aromatischen Polycarbonats,

B. 0 bis 50, vorzugsweise 1 bis 30 Gew.-Teile, eines Vinyl-(Co)-polymerisats aus wenigstens einem Monomeren ausgewählt aus der Reihe Styrol, $\alpha$-Methylstyrol, kemsubstituierten Styrolen, $C_1$-$C_8$-Alkylmethacrylaten, $C_1$-$C_8$-Alkylacrylaten mit wenigstens einem Monomeren aus der Reihe Acrylnitril, Methacrylnitril, $C_1$-$C_8$-Alkylmethacrylaten, $C_1$-$C_8$-Alkylacrylaten, Maleinsäureanhydrid, N-substituierten Maleinimiden,

C. 0,5 bis 60 Gew.-Teilen, vorzugsweise 1 bis 40 Gew.-Teilen, besonders bevorzugt 2 bis 30 Gew.-Teilen eines Pfropfpolymerisates bestehend aus mindestens zwei Monomeren aus der Gruppe der ein- oder mehrfach ungesättigten Olefine, wie z.B. Ethylen, Propylen, Chloropren, Butadien, Isopren, Vinylacetat, Styrol, $\alpha$-Methylstyrol, kernsubstituierte Styrole, Vinylcyanide, wie z. B. Acrylnitril, Methacrylnitril, Maleinsäureanhydrid, N-substituierte-Maleinimide,

D. 0,01 bis 30 Gew.-Teile, vorzugsweise 0,01 bis 20 Gew.-Teile, besonders bevorzugt 0,01 bis 10 Gew.-Teile Aluminiumverbindung mit einem mittleren Teilchendurchmesser von 5 - 500 nm, bevorzugt 5 - 200 nm.

Die Summe aller Gewichtsteile A + B + C + D ergibt 100.

Jede der genannten Komponenten kann auch als Mischung eingesetzt werden.

## Komponente A

Erfindungsgemäß geeignete, thermoplastische, aromatische Polycarbonate gemäß Komponente A sind solche auf Basis der Diphenole der Formel (I)

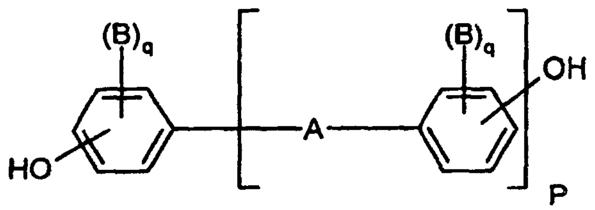

(I),

worin

A eine Einfachbindung $C_1$-$C_5$-Alkylen, $C_2$-$C_5$-Alkyliden, $C_5$-$C_6$-Cycloalkyliden, -S- oder -$SO_2$-,
B Chlor, Brom,
q 0, 1 oder 2 und
p 1 oder 0 sind,

oder alkylsubstituierte Dihydroxyphenylcycloalkane der Formel (II),

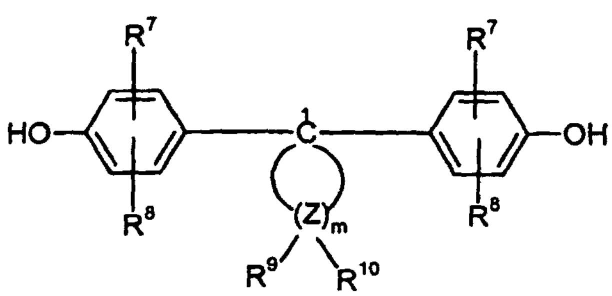

(II),

worin

$R^7$ und $R^8$ unabhängig voneinander, jeweils Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,
m eine ganze Zahl von 4, 5, 6 oder 7, bevorzugt 4 oder 5,
$R^9$ und $R^{10}$ für jedes Z individuell wählbar, unabhängig voneinander Wasserstoff oder $C_1$-$C_6$-Alkyl,

und

Z Kohlenstoff bedeutet, mit der Maßgabe, daß an mindestens einem Atom Z $R^9$ und $R^{10}$ gleichzeitig Alkyl bedeuten.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxy-phenyl)-propan, 2,2-Bis-(3,5-dibrom-4-hydroxyphenyl)-propan.
Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.
Bevorzugte Diphenole der Formel (II) sind 1,1-Bis-(4-hydroxyphenyl)-3,3-dimethylcyclohexan, 1,1-Bis-(4-hydroxyphenyl)-3,3,5-trimethylcyclohexan und 1,1-Bis-(4-hydroxyphenyl)-2,4,4-trimethyl-cyclopentan.
Erfindungsgemäß geeignete Polycarbonate sind sowohl Homopolycarbonate als auch Copolycarbonate.
Komponente A kann auch eine Mischung der vorstehend definierten thermoplastischen Polycarbonate sein.
Polycarbonate können in bekannter Weise aus Diphenolen mit Phosgen nach den Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.
Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2842005 oder Monoalkylphenol

bzw. Dialkylphenol mit insgesamt 8 bis 20 C-Atomen in den Alkylsubstituenten gemäß deutscher Patentanmeldung P 3506472.2 wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol%, bezogen auf die Summe der jeweils eingesetzten Diphenole der Formeln (I) und/oder (II).

Die erfindungsgemäß geeigneten Polycarbonate A haben mittlere Molekulargewichte $(\bar{M}_w$, Gewichtsmittel, gemessen z.B. durch Ultrazentrifugation oder Streulichtmessung) von 10000 bis 200000, vorzugsweise 20000 bis 80000.

Die erfindungsgemäß geeigneten Polycarbonate A können in bekannter Weise verzweigt sein, und zwar vorzugsweise durch den Einbau von 0.05 bis 2 Mol-%, bezogen auf die Summe der eingesetzten Diphenole, an tri- oder mehr als trifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Molsummen an Diphenolen, an 2,2-Bis-(3,5-dibrom-4-hydroxyphenyl)-propan und die Copolycarbonate von Bisphenol A mit bis zu 60 Mol-%, bezogen auf die Molsummen an Diphenolen, 1,1-Bis-(4-hydroxyphenyl)-3,3,5-trimethylcyclohexan.

Die Polycarbonate A können teilweise oder vollständig durch aromatische Polyestercarbonate ersetzt werden. Die aromatischen Polycarbonate der Komponente A können auch PolysiloxanBlöcke enthalten. Deren Herstellung wird beispielsweise in der DE-OS 3334872 und in der US-PS 3821325 beschrieben.

## Komponente B

Erfindungsgemäß einsetzbare Vinyl-(Co)polymerisate gemäß Komponente B sind solche aus wenigstens einem Monomeren aus der Reihe: Styrol, $\alpha$-Methylstyrol und/oder kemsubstituierten Styrolen, $C_1$-$C_8$-Alkylmethacrylat, $C_1$-$C_8$-Alkylacrylat mit wenigstens einem Monomeren aus der Reihe: Acrylnitril, Methacrylnitril, $C_1$-$C_8$-Alkylmethacrylat, $C_1$-$C_8$-Alkylacrylat, Maleinsäureanhydrid und/oder N-substituierte Maleinimide (B.2).

$C_1$-$C_8$-Alkylacrylate bzw. $C_1$-$C_8$-Alkylmethacrylate sind Ester der Acrylsäure bzw. Methacrylsäure und einwertiger Alkohole mit 1 bis 8 C-Atomen. Besonders bevorzugt sind Methacrytsäuremethylester, -ethylester und -propylester. Als besonders bevorzugter Methacrylsäureester wird Methylmethacrylat genannt.

Thermoplastische (Co)polymerisate mit einer Zusammensetzung gemäß Komponente B können bei der Pfropfpolymerisation zur Herstellung der Komponente C als Nebenprodukt entstehen, besonders dann, wenn große Mengen Monomere auf kleine Mengen Kautschuk gepfropft werden. Die erfindungsgemäß einzusetzende Menge an (Co)polymerisat B bezieht diese Nebenprodukte der Pfropfpolymerisation nicht mit ein.

Die (Co)polymerisate gemäß Komponente B sind harzartig, thermoplastisch und kautschukfrei.

Besonders bevorzugte (Co)polymerisate B sind solche aus Styrol (B1) mit Acrylnitril und gegebenenfalls mit Methylmethacrylat (B2), aus $\alpha$-Methylstyrol (B1) mit Acrylnitril und gegebenenfalls mit Methylmethacrylat (B2), oder aus Styrol (B1) und $\alpha$-Methylstyrol mit Acrylnitril und gegebenenfalls mit Methylmethacrylat (B2).

Die thermoplastischen (Co)polymerisate B enthalten 50 bis 99, vorzugsweise 60 bis 95 Gew.-Teile B.1 und 50 bis 2, vorzugsweise 40 bis 5 Gew.-Teile B.2.

Die Styrol-Acrylnitril-Copolymerisate gemäß Komponente B sind bekannt und lassen sich durch radikalische Polymerisation, insbesondere durch Emulsions-, Suspensions-, Lösungs- oder Massepolymerisation herstellen. Die Copolymerisate gemäß Komponente B besitzen vorzugsweise Molekulargewichte $\bar{M}_w$ (Gewichtsmittel, ermittelt durch Lichtstreuung oder Sedimentation) zwischen 15000 und 200000.

Besonders bevorzugte erfindungsgemäße Copolymerisate B sind auch statistisch aufgebaute Copolymerisate aus Styrol und Maleinsäureanhydrid, die durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.%.

Die Molekulargewichte (Zahlenmittel $\bar{M}_n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60000 bis 200000. Bevorzugt ist für diese Produkte eine Grenzviskosität von 0.3 bis 0.9 (gemessen in Dimethylformamid bei 25°C; siehe hierzu Hoffmann, Krömer, Kuhn, Polymeranalytik I, Stuttgart 1977, Seite 316 ff.).

Anstelle von Styrol können die Vinyl(Co)polymerisate B auch kernsubstituierte Styrole wie p-Methylstyrol, Vinyltoluol, 2,4-Dimethylstyrol und andere substituierte Styrole wie $\alpha$-Methylstyrol, die gegebenenfalls halogniert sein

können, enthalten.

Komponente C

Die Pfropfpolymerisate C umfassen z.B. Pfropfcopolymerisate mit kautschukelastischen Eigenschaften, die im wesentlichen aus mindestens zwei der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind. Bevorzugte Polymerisate C sind partiell vernetzt und besitzen Gelgehalte von über 20 Gew.-%, vorzugsweise über 40 Gew.-%, insbesondere über 60 Gew.%.

Bevorzugte Pfropfpolymerisate C umfassen Pfropfpolymerisate aus:

C.1 5 bis 95, vorzugsweise 30 bis 80 Gew.-Teile, einer Mischung aus

C.1.1 50 bis 95 Gew.-Teilen Styrol, $\alpha$-Methylstyrol, mit Halogen oder Methyl kernsubstituiertem Styrol, $C_1$-$C_8$-Alkylmethacrylat, insbesondere Methylmethacrylat, $C_1$-$C_8$-Alkylacrylat, insbesondere Methylmethacrylat oder Mischungen dieser Verbindungen und

C.1.2 5 bis 50 Gew.-Teilen Acrylnitril, Methacrylnitril, $C_1$-$C_8$-Alkylmethacrylaten, insbesondere Methylmethacrylat, $C_1$-$C_8$-Alkylacrylat, insbesondere

Methacrylat, Maleinsäureanhydrid, $C_1$-$C_4$-alkyl-bzw, phenyl-N-substituierte Maleinimide oder Mischungen dieser Verbindungen auf

C.2 5 bis 95, vorzugsweise 20 bis 70 Gew.-Teilen Polymerisat mit einer Glasübergangstemperatur unter -10°C als Pfropfgrundlage.

Bevorzugte Pfropfpolymerisate C sind z.B. mit Styrol und/oder Acrylnitril und/oder (Meth)-Acrylsäurealkylestern gepfropfte Polybutadiene, Butadien/Styrol-Copolymerisate und Acrylatkautschuke; d.h. Copolymerisate der in der DE-OS 1694173 (=US-PS 3564077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol oder Butadien/Acrylnitril-Copolymerisate, Polyisobutene oder Polyisoprene, wie sie z.B. in der DE-OS 2348377 (=US-PS 3919353) beschrieben sind.

Besonders bevorzugte Polymerisate C sind z.B. ABS-Polymerisate, wie sie z.B. in der DE-OS 2035390 (=US-PS 3644574) oder in der DE-OS 2248242 (=GB-PS 1409275) beschrieben sind.

Besonders bevorzugte Pfropfpolymerisate C sind Pfropfpolymerisate, die durch Pfropfreaktion von

I. 10 bis 70, vorzugsweise 15 bis 50, insbesondere 20 bis 40 Gew.%, bezogen auf Pfropfprodukt, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.%, bezogen auf Gemisch, Acrylnitril oder (Meth)-Acrylsäureester und 50 bis 90, vorzugsweise 65 bis 80 Gew.%, bezogen auf Gemisch, Styrol auf

II. 30 bis 90, vorzugsweise 50 bis 85, insbesondere 60 bis 80 Gew.%, bezogen auf Pfropfprodukt, eines Butadien-Polymerisats mit mindestens 50 Gew.%, bezogen auf II, Butadienresten als Pfropfgrundlage

erhältlich sind,
wobei der Gelanteil der Pfropfgrundlage II vorzugsweise mindestens 20 Gew.%, besonders bevorzugt mindestens 40 Gew.% (in Toluol gemessen), der Pfropfgrad G 0,15 bis 0,55 und der mittlere Teilchendurchmesser $d_{50}$ des Pfropfpolymerisats 0,05 bis 2 $\mu$m, vorzugsweise 0,1 bis 0,6 $\mu$m betragen.

(Meth)-Acrylsäureester I sind Ester der Acrylsäure oder Methacrylsäure und einwertiger Alkoholen mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/ oder Vinylether enthalten. Die bevorzugte Pfropfgrundlage II besteht aus reinem Polybutadien.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate C sind z.B. auch Pfropfpolymerisate aus

(a) 20 bis 90 Gew.%, bezogen auf C, Acrylatkautschuk mit einer Glasübergangstemperatur unter -20°C als Pfropfgrundlage und
(b) 10 bis 80 Gew.%, bezogen auf C, mindestens eines polymerisierbaren, ethylenisch ungesättigten Monomeren (vgl. C.1) als Pfropfmonomere.

Die Acrylatkautschuke (a) der Polymerisate C sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.
Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethaerylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.
Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.
Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.
Die Menge der vernetzenden Monomeren beträgt vorzugsweise 0.02 bis 5, insbesondere 0.05 bis 2 Gew.-%, bezogen auf die Pfropfgrundlage (a).
Bei cyclischen vernetzenden Monomeren mit mindestens 3 ethylenisch ungesättigten Gruppen ist es vorteilhaft, die Menge auf unter 1 Gew.% der Pfropfgrundlage (a) zu beschränken.
Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.% aufweisen.
Weitere geeignete Pfropfgrundlagen sind Silikonkautschuke mit pfropfaktiven Stellen, wie sie in Offenlegungsschriften DE-OS 3704657, DE-OS 3704655, DE-OS 3631540 und DE-OS 3631539 beschrieben werden.
Der Gelgehalt der Pfropfgrundlage (a) wird bei 25°C in Dimethylformamid bestimmt (M. Hoffmann, H. Krömer, R. Kuhn, Polymeranalytik I und II, Georg Thieme-Verlag, Stuttgart 1977).
Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomeren in Gegenwart der Pfropfgrundlage gewonnen werden.

**Komponente D**

Als Komponente D geeignet sind Verbindungen von Aluminium mit einem oder mehreren Metallen der 1. bis 5. Hauptgruppe und 1. bis 8. Nebengruppe des Periodensystems, bevorzugt 2. bis 5. Hauptgruppe und 4. bis 8. Nebengruppe, besonders bevorzugt 3. bis 5. Hauptgruppe und 4. bis 8. Nebengruppe oder Verbindungen mit den Elementen Sauerstoff, Kohlenstoff, Stickstoff, Wasserstoff, Schwefel und Silicium.
Erfindungsgemäß sind Oxide, wasserhaltige Oxide, Phosphate, Sulfate, Sulfide, Hydroxide, Borate, Borphosphate des Aluminiums einsetzbar. Besonders bevorzugt sind Aluminiumoxidhydroxid, Aluminiumphosphat und Aluminiumborat. Höchst bevorzugt sind Aluminiumoxidhydroxid.
Die Teilchengröße beträgt erfindungsgemäß 5-500 nm.
Bevorzugt sind wasserhaltige Verbindungen wie Aluminiumoxidhydroxid.
Teilchengröße und Teilchendurchmesser bedeutet immer den mittleren Teilchendurchmesser $d_{50}$, ermittelt durch Ultrazentrifugenmessungen nach W. Scholtan et al. Kolloid-Z. und Z.Polymere 250(1972), S. 782 bis 796.
Die Aluminium Verbindungen können als Pulver, Pasten, Sole, Dispersionen oder Suspensionen vorliegen. Durch Ausfällen können aus Dispersionen, Sole oder Suspensionen Pulver erhalten werden.
Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Komponenten B oder C mit Dispersionen, Suspensionen, Pasten oder Solen der feinstteiligen anorganischen Materialien dar.
Die erfindungsgemäßen Formmassen können übliche Additive, wie feinstteilige anorganische Verbindungen, Gleit- und Entformungsmittel, Nukleierungsmittel, Antistatika, Stabilisatoren, Füll- und Verstärkungsstoffe sowie Farbstoffe und Pigmente enthalten. Die Verarbeitungshilfsmittel werden in den üblichen Mengen zugesetzt.

Die anorganischen Verbindungen umfassen Verbindungen eines oder mehrerer Metalle der 1. bis 5. Hauptgruppe und der 1. bis 8. Nebengruppe des Periodensystems, bevorzugt der 2. bis 5. Hauptgruppe und der 4. bis 8. Nebengruppe, besonders bevorzugt der 3. bis 5. Hauptgruppe und der 4. bis 8. Nebengruppe mit den Elementen Sauerstoff, Schwefel, Bor, Phosphor, Kohlenstoff, Stickstoff, Wasserstoff und/oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, $TiO_2$, $SnO_2$, WC, ZnO, $ZrO_2$, $Sb_2O_3$, $SiO_2$, Eisenoxide, $NaSO_4$, $BaSO_4$, Vanadiumoxide, Zinkborat, Silicate wie Al-Silikate, Mg-Silikate, ein, zwei, dreidimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser $d_{50}$, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Formmassen können bis zu 25 Gew.-Teilen (bezogen auf die Gesamtformmasse) anorganische Verbindungen enthalten.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Komponenten B oder C mit Dispersionen, Suspensionen, Pasten oder Solen der feinstteiligen anorganischen Materialien dar.

Die thermoplastischen Formmassen können anorganische Füll- und Verstärkungsmaterialien wie Glasfasern, gegebenenfalls geschnitten oder gemahlen, Glasperlen, Glaskugeln, blättchenförmiges Verstärkungsmaterial, wie Kaolin, Talk, Glimmer, Silicate, Quarz, Talkum, Titandioxid, Wollastonit, Mika, Kohlefasern oder deren Mischung enthalten. Vorzugsweise werden als Verstärkungsmaterial geschnittene oder gemahlene Glasfasern eingesetzt. Bevorzugte Füllstoffe, die auch verstärkend wirken können sind Glaskugeln, Glimmer, Silikate, Quarz, Talkum, Titandioxid, Wollastonit.

Die gefüllten bzw. verstärkten Formmassen können bis zu 60, vorzugsweise 10 bis 40 Gew.-%, bezogen auf die gefüllte bzw. verstärkte Formmasse, Füll- und/oder Verstärkungsstoffe enthalten

Die erfindungsgemäßen Formmassen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert oder schmelzextrudiert, wobei die fluorierten Polyolefine vorzugsweise in Form der bereits erwähnten koagulierten Mischung eingesetzt werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörpern durch Spritzguß hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen, wie Computer, Drucker, Monitore oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an Kerbschlagzähigkeit und Spannungsrißbeständigkeit der eingesetzten Kunststoffe gestellt werden.

Eine weitere Form der Verarbeitung ist die Herstellung von Formkörpern durch Blasformen oder durch Tiefziehen aus vorher hergestellten Platten oder Folien.

## Beispiele

### Komponente A

Polycarbonat auf Basis Bisphenol A mit einer relativen Lösungsviskosität von 1,252, gemessen in Methylenchlorid bei 25°C und in einer Konzentration von 0,5 g/100 ml.

### Komponente B

Styrol/Acrylnitril-Copolymerisat mit einem Styrol/Acrylnitril-Verhältnis von 72:28 und einer Grenzviskosität von

0,55 dl/g (Messung in Dimethylformamid bei 20°C).

**Komponente C**

Pfropfpolymerisat von 40 Gew.-Teilen Styrol und Acrylnitril im Verhältnis von 73:27 auf 60 Gew.-Teile teilchenförmigen vernetzten Polybutadienkautschuk (mittlerer Teilchendurchmesser $d_{50}$ = 0,3 µm), hergestellt durch Emulsionspolymerisation.

**Komponente D**

Als anorganische Verbindung wird Pural 200, ein Aluminiumoxidhydroxid (Fa. Condea, Hamburg, Deutschland), eingesetzt. Die mittlere Teilchengröße des Materials beträgt ca. 20-40 nm.

**Herstellung und Prüfung der erfindungsgemäßen Formmassen**

Das Mischen der Komponenten A bis D erfolgt auf einem 3 l-Innenkneter. Die Formkörper werden auf einer Spritzgießmaschine Typ Arburg 270E bei 260°C hergestellt.

Der Zug-E-Modul wird nach Methode ISO 527 gemessen.

Die Reißdehnung DR wird im Rahmen der Bestimmung des Zug-E-Moduls nach Methode ISO 527 an F3 Schulterstäben bestimmt.

Die Bestimmung der antistatischen Wirkung erfolgt nach einem Staubfigurentest. Hierzu werden Rundplatten mit einem Baumwolltuch statisch aufgeladen und anschließend mit Aluminiumpulver bestäubt. Die Beurteilung erfolgt visuell.

Die Bestimmung der Wärmeformbeständigkeit nach Vicat B erfolgt gemäß DIN 53460.

Die Zusammensetzung der geprüften Materialien sowie die erhaltenen Daten sind in der folgenden Tabelle 1 zusammengefaßt.

**Tabelle 1**

| **Beispiele** | **1** | **2** |
|---|---|---|
| | Vergleich | |
| Komponenten:[%] | | |
| A | 42.60 | 42.18 |
| B | 32.70 | 32.38 |
| C | 23.80 | 23.57 |
| D | - | 0.99 |
| Additive (Verarbeitungshilfsmittel) | 0.90 | 0.88 |
| | | |
| Eigenschaften: | | |
| Vicat B 120 [°C] | 111 | 111 |
| Staubfigurentest | - | + |
| Zug-E-Modul [N/mm$^2$] | 1982 | 2143 |
| Reißdehnung [%] | 44.6 | 62.5 |
| MUR (260°C/5kg) [ccm/10 min.] | 8.3 | 12.2 |
| $a_k$ Izod 260°C/23°C [kJ/m$^2$] | 61.9 | 66.6 |

**Patentansprüche**

1. Thermoplastische Formmassen enthaltend thermoplastisches Polycarbonat und 0,01 bis 30 Gew.-Teile pro 100 Gew.-Teile Polycarbonat AluminiumVerbindungen mit einem mittleren Teilchendurchmesser von 5-500 nm beträgt.

2. Thermoplastische Formmasse nach Anspruch 1 **dadurch gekennzeichnet, daß** sie Oxide, wasserhaltige Oxide, Phosphate, Sulfate, Sulfide, Sulfite, Hydroxide, Borate, Borphosphate des Aluminiums enthält.

3. Thermoplastische Formmasse nach Anspruch 1 enthaltend

   A. 40 bis 99 Gew.-Teile aromatisches Polycarbonat,
   B. 0 bis 50 Gew.-Teile Vinylcopolymerisat,
   C. 0.5 bis 60 Gew.-Teile Pfropfpolymerisat,
   D. 0.1 bis 30 Gew.-Teile Alumiumverbindung.

4. Formmassen gemäß Anspruch 1, enthaltend 50 bis 95 Gew.-Teile aromatisches Polycarbonat A.

5. Formmassen gemäß Anspruch 3, enthaltend Pfropfpolymerisate C hergestellt durch Copolymerisation von

   C.1. 5 bis 95 Gew.-Teilen einer Mischung aus
   50 bis 95 Gew.-Teilen Styrol, α-Methylstyrol, halogen- oder alkytkemsubstituiertem Styrol, $C_1$-$C_8$-Alkylmethacrylat, $C_1$-$C_8$-Alkylacrylat oder Mischungen dieser Verbindungen und
   5 bis 50 Gew.-Teilen Acrylnitril, Methacrylnitril, $C_1$-$C_8$-Alkylmethacrylat, $C_1$-$C_8$-Alkylacrylat, Maleinsäureanhydrid, $C_1$-$C_4$-alkyl- bzw. phenyl-N-substituiertem Maleinimid oder Mischungen dieser Verbindungen, und
   C.2. 95 bis 5 gew.-Teilen Polymerisate mit einer Glasübergangstemperatur unter -10°C als Pfropfgrundlage.

6. Formmassen nach einem der Ansprüche 1 bis 5, wobei sie mindestens einen Zusatz aus der Gruppe der Stabilisatoren, Pigmente, Entformungsmittel, Fließhilfsmittel und/oder Antistatika enthalten.

7. Formmassen nach einem der Ansprüche 1 bis 6, wobei sie mindestens einen Zusatz aus der Gruppe der Füll- und Verstärkungsstoffe und der anorganischen Verbindungen enthalten.

8. Verwendung der Formmassen nach einem der vorhergehenden Ansprüche zur Herstellung von Formkörpern.

9. Formkörper, hergestellt aus Formmassen nach einem der vorhergehenden Ansprüche.

**Revendications**

1. Matières à mouler thermoplastiques contenant un polycarbonate thermoplastique et 0,01 à 30 parties en poids, pour 100 parties en poids du polycarbonate, de dérivés de l'aluminium à un diamètre de particule moyen de 5 à 500 nm.

2. Matière à mouler thermoplastique selon la revendication 1, **caractérisée en ce qu'**elle contient des oxydes, des oxydes hydratés, des phosphates, des sulfates, des sulfures, des sulfites, des hydroxydes, des borates, des borophosphates de l'aluminium.

3. Matière à mouler thermoplastique selon la revendication 1, contenant

   A. 40 à 99 parties en poids d'un polycarbonate aromatique,
   B. 0 à 50 parties en poids d'un copolymère vinylique,
   C. 0,5 à 60 parties en poids d'un polymère greffé,
   D. 0,1 à 30 parties en poids d'un dérivé de l'aluminium.

4. Matières à mouler selon la revendication 1, contenant 50 à 95 parties en poids d'un polycarbonate aromatique A.

5. Matières à mouler selon la revendication 3, contenant des polymères greffés C préparés par copolymérisation de

   C.1. 5 à 95 parties en poids d'un mélange de
   50 à 95 parties en poids de styrène, d'α-méthylstyrène, d'un styrène substitué par des halogènes ou des groupes alkyle dans le noyau, d'un méthacrylate d'alkyle en $C_1$-$C_8$, d'un acrylate d'alkyle en $C_1$-$C_8$ ou d'un mélange de ces composés et
   5 à 50 parties en poids d'acrylonitrile, de méthacrylonitrile, d'un méthacrylate d'alkyle en $C_1$-$C_8$, d'un acrylate

d'alkyle en $C_1$-$C_8$, de l'anhydride maléique, d'un maléimide substitué à l'azote par un groupe alkyle en $C_1$-$C_4$ ou phényle, ou d'un mélange de ces composés, et
C.2. 95 à 5 parties en poids d'un polymère ayant une température de transition du second ordre inférieure à -10°C et qui sert de support de greffage.

**6.** Matières à mouler selon l'une des revendications 1 à 5, contenant au moins un additif du groupe des stabilisants, des pigments, des agents de démoulage, des produits auxiliaires fluidifiants et/ou des agents antistatiques.

**7.** Matières à mouler selon l'une des revendications 1 à 6, contenant au moins un additif du groupe des matières de charge et des matières renforçantes et des composés minéraux.

**8.** Utilisation des matières à mouler selon l'une des revendications qui précèdent pour la fabrication d'objets moulés.

**9.** Objets moulés fabriqués à partir des matières à mouler selon l'une des revendications qui précèdent.

**Claims**

**1.** Thermoplastic moulding compositions comprising thermoplastic polycarbonate and 0.01 to 30 parts by wt. per 100 parts by wt. of polycarbonate of aluminium compounds having an average particle diameter of 5 - 500 nm.

**2.** Thermoplastic moulding composition according to claim 1, **characterized in that** it comprises oxides, water-containing oxides, phosphates, sulfates, sulfides, sulfites, hydroxides, borates or borophosphates of aluminium.

**3.** Thermoplastic moulding composition according to claim 1 comprising

A. 40 to 99 parts by wt. aromatic polycarbonate,
B. 0 to 50 parts by wt. vinyl copolymer,
C. 0.5 to 60 parts by wt. graft polymer,
D. 0.1 to 30 parts by wt. aluminium compound.

**4.** Moulding compositions according to claim 1, comprising 50 to 95 parts by wt. aromatic polycarbonate A.

**5.** Moulding compositions according to claim 3, comprising graft polymers C prepared by copolymerization of

C.1. 5 to 95 parts by wt. of a mixture of
50 to 95 parts by wt. styrene, $\alpha$-methylstyrene, styrene substituted on the nucleus by halogen or alkyl, $C_1$-$C_8$-alkyl methacrylate, $C_1$-$C_8$-alkyl acrylate or mixtures of these compounds and
5 to 50 parts by wt. acrylonitrile, methacrylonitrile, $C_1$-$C_8$-alkyl methacrylate, $C_1$-$C_8$-alkyl acrylate, maleic anhydride, $C_1$-$C_4$-alkyl or phenyl-N-substituted maleimide or mixtures of these compounds.
C.2. 95 to 5 parts by wt. polymer having a glass transition temperature below -10 °C as the graft base.

**6.** Moulding compositions according to any one of claims 1 to 5, which comprise at least one additive from the group consisting of stabilizers, pigments, mould release agents, flow auxiliaries and/or antistatics.

**7.** Moulding compositions according to any one of claims 1 to 6, which comprise at least one additive from the group consisting of fillers and reinforcing materials and inorganic compounds.

**8.** Use of the moulding compositions according to any one of the preceding claims for the production of shaped articles.

**9.** Shaped articles produced from moulding compositions according to any one of the preceding claims.